# EUROPÄISCHE PATENTSCHRIFT

(11) **EP 3 653 905 B1**
(45) Veröffentlichungstag und Bekanntmachung des Hinweises auf die Patenterteilung: **09.06.2021**
(21) Anmeldenummer: 18206043.4
(22) Anmeldetag: 13.11.2018
(51) Int. Cl.: F16H 1/32, F16H 55/10, F16H 1/46, F16H 49/00

(54) **EXZENTERGETRIEBE**
ECCENTRIC TRANSMISSION
ENGRENAGE EXCENTRIQUE

(43) Veröffentlichungstag der Anmeldung: 20.05.2020
(73) Patentinhaber: maxon international ag, 6072 Sachseln (CH)
(72) Erfinder: von Lehmann, Ernst, 79286 Glottertal (DE)
(74) Vertreter: Grünecker Patent- und Rechtsanwälte PartG mbB

(56) Entgegenhaltungen:
- JP-A- S59 141 775
- US-A- 3 068 719

## Beschreibung

Die vorliegende Erfindung betrifft ein Exzentergetriebe nach dem Oberbegriff des unabhängigen Anspruchs 1.

Ein gattungsgemäßes Exzentergetriebe umfasst ein erstes Getriebeelement, das eine erste Achse sowie eine Außenkontur mit zumindest einer in Bezug auf die erste Achse radial abstehenden Nocke aufweist, und ein zweites Getriebeelement, das eine stets exzentrisch in Bezug auf die erste Achse gehaltene zweite Achse aufweist, wobei das erste Getriebeelement relativ zum zweiten Getriebeelement drehbar um die erste Achse gelagert ist, und wobei das zweite Getriebeelement derart an der Außenkontur des ersten Getriebeelements abgestützt ist, dass eine Rotation des ersten Getriebeelements um die erste Achse eine Rotation der zweiten Achse des zweiten Getriebeelements um die erste Achse bewirkt.

Ein Exzentergetriebe nach dem Oberbegriff des unabhängigen Anspruchs 1 ist beispielsweise aus EP 3364071 A2 bekannt. Es handelt sich hierbei um ein Zykloidgetriebe. Das erste Getriebeelement wird durch eine Kurbelwelle gebildet, die eine kreisförmige Exzenternocke aufweist und über diese eine Zykloidscheibe antreibt, deren Außenverzahnung in die Innenverzahnung eines Hohlrads eingreift. Die Zykloidscheibe bildet somit ein zweites Getriebeelement nach dem Oberbegriff des unabhängigen Anspruchs 1. Das aus EP 3364071 A2 bekannte Zykloidgetriebe verfügt insgesamt über vier Zykloidscheiben, jeweils angetrieben über eine eigene Exzenternocke.

Eine grundsätzliche Herausforderung bei der Auslegung und Konstruktion von Zykloidgetrieben ist es, das Getriebe so zu gestalten, dass keine Unwuchten auftreten. Erst ab drei hintereinander angeordneten, versetzt arbeitenden Zahnkränzen bzw. Zykloidscheiben kann ein Zykloidgetriebe frei von Unwucht sein. Die Kurbelwelle muss ebenfalls mindestens drei Exzenternocken aufweisen, und die Zykloidscheiben müssen über jeweils ein separates Kugellager auf den entsprechenden Exzenternocken gelagert werden. Dies führt dazu, dass insgesamt relativ viele Teile benötigt werden, und das Getriebe insgesamt relativ groß ist. Insbesondere wird eine relativ große Baulänge erreicht. Aufgrund der hohen Anzahl an Bauteilen ist das Getriebe zudem teuer und aufwendig in der Herstellung.

Ferner offenbart die US 3,068,719 ein Getriebe mit einem ersten Getriebeelement in Form einer Ausgangswelle und mit einem zweiten Getriebeelement in Form eines Kettenbandes. An der Ausgangswelle sind drei exzentrische Bereiche ausgebildet, wobei zwei dieser exzentrischen Bereiche identisch angeordnet sind und der dritte exzentrische Bereich ist im Vergleich zu den anderen beiden exzentrischen Bereichen um 180° versetzt angeordnet ist. Auf jedem der exzentrischen Bereichen der Ausgangswelle sind nach außen ragende Arme (spider assemblies) angeordnet, an denen das Kettenband anliegt. Da der eine exzentrische Bereich im Vergleich zu den anderen beiden exzentrischen Bereichen versetzt ist, wird das flexible Kettenband elliptisch verformt. Das Kettenband weist ferner nach außen ragende Zähne auf, die durch die elliptische Verformung in die Zähne eines feststehenden Hohlrads eingreifen, wobei das Hohlrad eine größere Zähnezahl aufweist als das Kettenband. Das Getriebe weist ferner eine Eingangswelle auf, die fest mit einem Zahnrad verbunden ist. Eine Drehbewegung der Eingangswelle wird über das Zahnrad, das Hohlrad, das Kettenband, sowie die exzentrischen Elemente der Ausgangswelle und die darauf angeordneten Arme in eine gegensinnige Drehbewegung der Ausgangswelle übertragen. Da das Kettenband elliptisch verformt ist, weist es keine zweite Achse auf, die bei einer Rotation des ersten Getriebeelements um die erste Achse ebenfalls um die erste Achse rotiert.

Die JP S59 141775 zeigt ein Harmonic Drive Getriebe, das mit einem Hydraulikmotor gekoppelt ist. Ein Rotor des Hydraulikmotors weist ein erstes Getriebeelement in Form von zwei Druckstücken auf, die mit unter Druck stehender Flüssigkeit beaufschlagt werden können. Dadurch werden die Druckstücke gegen die innere Umfangsfläche eines zweiten Getriebeelements, eines flexiblen Zahnrads, gedrückt und führen zu einer elastischen Verformung des flexiblen Zahnrads ebenfalls an zwei Stellen. Das Zahnrad wird also elliptisch verformt und kommt dadurch an zwei Stellen seines Umfangs mit einem Hohlrad in Eingriff. Wenn sich der Rotor dreht, verschieben sich die Punkte, an denen die Druckstücke mit dem flexiblen Zahnrad in Kontakt kommen und übertragen die Drehung des Rotors auf eine Ausgangswelle. Die Druckstücke sind nicht als Nocken ausgebildet, sondern weisen eine unregelmäßige Oberfläche auf. Auch hier weist das zweite Getriebeelement keine zweite Achse auf, die bei einer Rotation des ersten Getriebeelements um die erste Achse ebenfalls um die erste Achse rotiert.

Die vorliegende Erfindung hat sich daher zur Aufgabe gestellt, ein Exzentergetriebe der gattungsgemäßen Art anzugeben, das wesentlich einfacher aufgebaut ist, eine kompakte Bauweise aufweist, und günstiger in der Herstellung ist.

Die Aufgabe wird gelöst durch die Merkmale des unabhängigen Anspruchs 1. Demnach liegt bei einem Exzentergetriebe nach dem Oberbegriff des unabhängigen Anspruchs 1 dann eine erfindungsgemäße Lösung der Aufgabe vor, wenn die Außenkontur des ersten Getriebeelements eine Anzahl N in Bezug auf die erste Achse radial abstehende Nocken aufweist, die in Bezug auf die erste Achse gleichmäßig in Umfangsrichtung verteilt angeordnet sind, wobei das zweite Getriebeelement in N+1 Anlagepunkten an der Außenkontur des ersten Getriebeelements abgestützt ist, und wobei die Anzahl N zumindest zwei beträgt.

Die erfindungsgemäße Lösung hat den Vorteil, dass das erste Getriebeelement bereits von sich aus frei von Unwucht sein kann. Zudem können durch ein und dieselbe Außenkontur des ersten Getriebeelements mehrere hintereinander angeordnete zweite Getriebeelemente, die versetzt zueinander arbeiten, angetrieben werden. Die Anzahl der benötigten Bauteile sowie der Fertigungs- und Montageaufwand reduzieren sich. Das Getriebe kann sehr kompakt gehalten werden.

Die Anlagepunkte sind in Bezug auf die zweite Achse vorzugsweise gleichmäßig in Umfangsrichtung verteilt. Sofern ein direkter Kontakt zwischen der Außenkontur des ersten Getriebeelements und dem zweiten Getriebeelement besteht, so wandern die Anlagepunkte bei Rotation des ersten Getriebeelements um die erste Achse entlang der Außenkontur des ersten Getriebeelements. Weiter vorzugsweise ist die Außenkontur des ersten Getriebeelements über den gesamten Umfang konvex.

Vorteilhafte Ausführungsformen der vorliegenden Erfindung sind Gegenstand der Unteransprüche.

Gemäß einer besonders bevorzugten Ausführungsform der vorliegenden Erfindung wird die Außenkontur des ersten Getriebeelements durch eine geschlossene Trochoide mit N Zyklen gebildet. Bei der Trochoide handelt es sich weiter bevorzugt um eine Epitrochoide bzw. eine Epizykloide. Bei dieser Ausführungsform ist gewährleistet, dass das zweite Getriebeelement über den gesamten Arbeitsbereich spielfrei in sämtlichen Anlagepunkten an der Außenkontur des ersten Getriebeelements anliegt.

Gemäß einer weiteren Ausführungsform der vorliegenden Erfindung weist das zweite Getriebeelements N+1 Anlagenocken auf, die in Bezug auf die zweite Achse des zweiten Getriebeelements gleichmäßig in Umfangsrichtung verteilt angeordnet sind und zur zweiten Achse weisen, wobei das zweite Getriebeelement über die Anlagenocken in N+1 Anlagepunkten an der Außenkontur des ersten Getriebeelements abgestützt ist. Zwischen den Anlagenocken weist das zweite Getriebeelement vorzugsweise großzügig bemessene Aussparungen auf, sodass verhindert wird, dass die Außenkontur des ersten Getriebeelements zwischen den Anlagenocken mit einer Innenkontur des zweiten Getriebeelements in Berührung kommt. Eine besonders einfache Auslegung ergibt sich, wenn die Anlagenocken zumindest in einem Bereich, in dem der entsprechende Anlagepunkt zu liegen kommen kann, eine kreisförmige, gegenüber der zweiten Achse konvexe Kontur aufweisen.

Besonders bevorzugt ist die Außenkontur des ersten Getriebeelements bei dieser Ausführungsform von einer elastisch verformbaren Hülse umgeben, die über mehrere zwischen erstem Getriebeelement und Hülse angeordnete Wälzkörper drehbar gegenüber dem ersten Getriebeelement gelagert ist, wobei die Anlagenocken in den Anlagepunkten an einem Außenumfang der Hülse anliegen, sodass das zweite Getriebeelement indirekt über die Anlagenocken an der Außenkontur des ersten Getriebeelements abgestützt ist. Durch die drehbare Lagerung der Hülse auf der Außenkontur des 1. Getriebeelements wird erreicht, dass sich die Hülse nicht zwangsweise mit dem ersten Getriebeelement mit dreht. Die elastisch verformbare Hülse wird bei Rotation des ersten Getriebeelements nach Art eines Flexsplines eines Harmonic Drive Getriebes fortlaufend verformt. Auf diese Weise kann eine Relativbewegung zwischen der Hülse und den Anlagenocken des zweiten Getriebeelements verhindert werden. Dies wiederum führt zu einem reibungsarmen Betrieb des erfindungsgemäßen Exzentergetriebes. Bei dieser Ausführungsform ist es von besonderem Vorteil, wenn die Außenkontur des ersten Getriebeelements über den gesamten Umfang konvex ist. Nur so ist sichergestellt, dass die elastisch verformbare Hülse die Form der Außenkontur des ersten Getriebeelements exakt parallel nachbildet. Zwischen der Außenkontur des ersten Getriebeelements und dem Innenumfang der Hülse besteht ein konstanter Abstand, welcher durch den Durchmesser der dazwischen angeordneten Wälzkörper bestimmt wird. Bei den Wälzkörpern handelt es sich vorzugsweise um Rollen oder Kugeln.

Gemäß einer alternativen Ausführungsform der vorliegenden Erfindung weist das Exzentergetriebe N+1 drehbar an dem zweiten Getriebeelement gelagerte Rollen auf, die in Bezug auf die zweite Achse des zweiten Getriebeelements gleichmäßig in Umfangsrichtung verteilt angeordnet sind und in den Anlagepunkten direkt auf der Außenkontur des ersten Getriebeelements abrollen. Bei dieser Ausführungsform ist keine elastisch verformbare Hülse erforderlich. Die Walkarbeit, die bei Verformung der Hülse verrichtet wird, entfällt, wodurch die Reibung insgesamt reduziert werden kann. Der Wirkungsgrad ist bei dieser Ausführungsform daher entsprechend hoch. Allerdings erfordert diese Ausführungsform einen etwas komplizierteren Aufbau des zweiten Getriebeelements. Das zweite Getriebeelement ist bei dieser Ausführungsform vorzugsweise aus mehreren Segmenten zusammengesetzt. Beispielsweise kann pro Rolle ein Segment des zweiten Getriebeelements vorgesehen sein. Der Aufbau des zweiten Getriebeelements aus mehreren Segmenten bietet unter anderem den Vorteil, dass selbst bei Verwendung lediglich eines einzigen zweiten Getriebeelements ein System aufgebaut werden kann, das frei von Unwucht ist.

Gemäß einer weiteren besonders bevorzugten Ausführungsform der vorliegenden Erfindung entspricht die Anzahl N der Zahl Zwei. Zum einen ist dadurch die Außenkontur des ersten Getriebeelements relativ einfach zu fertigen. Zum anderen ergibt sich dadurch eine relativ hohe Untersetzung.

Gemäß einer weiteren bevorzugten Ausführungsform der vorliegenden Erfindung ist das zweite Getriebeelement ein Zahnkranz, der eine Verzahnung mit einer ersten Teilung aufweist, die in eine Verzahnung eines Hohlrads mit einer zweiten Teilung eingreift, wobei die erste Teilung größer ist als die zweite Teilung. Vorzugsweise ist das Exzentergetriebe bei dieser Ausführungsform als Zykloidgetriebe ausgeführt, wobei der Zahnkranz als Zykloidscheibe ausgeführt ist. Das bedeutet, die Verzahnung des Zahnkranzes wird ebenfalls durch eine geschlossene Trochoide gebildet.

Weiter vorzugsweise weist der Zahnkranz bei dieser Ausführungsform eine Verzahnung mit einer ersten Anzahl von Zähnen auf, wobei das Hohlrad eine Verzahnung mit einer zweiten Anzahl von Zähnen aufweist, wobei die erste Anzahl von Zähnen, eine vollständige Ausführung der Verzahnung vorausgesetzt, kleiner ist als die zweite Anzahl von Zähnen. Die tatsächliche Anzahl der Zähne der Hohlradverzahnung kann geringer ausfallen, da nicht zwingend jeder Zahn auch ausgebildet sein muss. Beispielsweise kann nur jeder zweite Zahn tatsächlich vorhanden sein.

Die Zähne der Verzahnung des Hohlrads können, insbesondere wenn das zweite Getriebeelement als Zykloidscheibe ausgeführt ist, in einer Abwandlung dieser Ausführungsform als Zylinderbolzen ausgeführt sein.

Das als Zahnkranz ausgeführte zweite Getriebeelement weist weiter vorzugsweise eine Durchgangsöffnung auf, in welcher das erste Getriebeelement angeordnet ist, und die weiter vorzugsweise die weiter oben angesprochenen Anlagenocken aufweist.

Weiter vorzugsweise weist das Exzentergetriebe einen relativ zum Hohlrad drehbar gelagerten Träger mit mehreren sich parallel zu seiner Achse erstreckenden Zapfen auf, die bei einer Rotation der zweiten Achse des Zahnkranzes um die erste Achse des ersten Getriebeelements jeweils am Umfang einer zugehörigen Bohrung des Zahnkranzes entlang gleiten oder abrollen. Die Zapfen des Trägers und die zugehörigen Bohrungen des Zahnkranes sind vorzugsweise jeweils gleichmäßig in Umfangsrichtung verteilt angeordnet. Weiter vorzugsweise sind insgesamt jeweils sechs Zapfen sowie Bohrungen vorhanden. Der Träger führt bei einer Rotation des ersten Getriebeelements eine gleichmäßige Rotationsbewegung aus und kann, sofern das erste Getriebeelement einen Eingang des Exzentergetriebes bildet und des Hohlrad festgehalten wird, als Ausgang des Exzentergetriebes verwendet werden.

Um das erfindungsgemäße Exzentergetriebe frei von Unwucht zu halten, sind weiter vorzugsweise zumindest drei hintereinander angeordnete Zahnkränze vorgesehen, die jeweils in N+1 Anlagepunkten an der Außenkontur des ersten Getriebeelements abgestützt sind, wobei die zweiten Achsen der Zahnkränze in Bezug auf die erste Achse des ersten Getriebeelements entsprechend gegeneinander versetzt sind.

In einer besonders bevorzugten Ausführungsform weist das Exzentergetriebe vier hintereinander angeordnete Zahnkränze auf, die jeweils in N+1 Anlagepunkten an der Außenkontur des ersten Getriebeelements abgestützt sind, wobei die zweiten Achsen der beiden äußeren Zahnkränze in Bezug auf die erste Achse des ersten Getriebeelements um 180° gegenüber den zweiten Achsen der beiden mittleren Zahnkränze versetzt sind. Die beiden äußeren Zahnkränze sowie die beiden mittleren Zahnkränze bewegen sich jeweils synchron. Diese Ausführungsform verhindert bei der Übertragung von größeren Kräften ein Verkanten der Zahnkränze.

Gemäß einer weiteren bevorzugten Ausführungsform der vorliegenden Erfindung ist der Zahnkranz, welcher das zweite Getriebeelement bildet, aus Stahl gefertigt. Alternativ kann der Zahnkranz auch aus Keramik gefertigt sein.

Ausführungsbeispiele der vorliegenden Erfindung werden im Folgenden anhand von Zeichnungen näher erläutert.

Es zeigen:
- Figur 1:: einen perspektivischen Längsschnitt durch ein erfindungsgemäßes Exzentergetriebe gemäß einem ersten Ausführungsbeispiel,
- Figur 2:: eine teilweise geschnittene perspektivische Ansicht eines erfindungsgemäßen Exzentergetriebes gemäß einem zweiten Ausführungsbeispiel,
- Figur 3:: eine weitere perspektivische Ansicht des erfindungsgemäßen Exzentergetriebes aus Figur 2 in teilweise geöffnetem Zustand,
- Figur 4:: eine Ansicht des Exzentergetriebes aus Figur 3 parallel zu dessen Achse,
- Figur 5:: die Ansicht aus Figur 4 mit geöffnetem Rollenlager zwischen erstem Getriebeelement und elastisch verformbarer Hülse,
- Figur 6:: die Ansicht aus Figur 4 mit einem um 30° gegenüber der in Figur 4 gezeigten Ausgangsstellung gedrehten ersten Getriebeelement,
- Figur 7:: die Ansicht aus Figur 4 mit einem um 60° gegenüber der in Figur 4 gezeigten Ausgangsstellung gedrehten ersten Getriebeelement,
- Figur 8:: die Ansicht aus Figur 4 mit einem um 90° gegenüber der in Figur 4 gezeigten Ausgangsstellung gedrehten ersten Getriebeelement,
- Figur 9:: die Ansicht aus Figur 4 mit einem um 120° gegenüber der in Figur 4 gezeigten Ausgangsstellung gedrehten ersten Getriebeelement,
- Figur 10:: die Ansicht aus Figur 4 mit einem um 150° gegenüber der in Figur 4 gezeigten Ausgangsstellung gedrehten ersten Getriebeelement,
- Figur 11:: die Ansicht aus Figur 4 mit einem um 180° gegenüber der in Figur 4 gezeigten Ausgangsstellung gedrehten ersten Getriebeelement,
- Figur 12:: einen perspektivischen Längsschnitt durch ein erfindungsgemäßes Exzentergetriebe gemäß einem dritten Ausführungsbeispiel,
- Figur 13:: eine perspektivische Detailansicht eines möglichen zweiten Getriebeelements des erfindungsgemäßen Exzentergetriebes aus Figur 12, und
- Figur 14:: eine perspektivische Detailansicht des zweiten Getriebeelements des erfindungsgemäßen Exzentergetriebes aus Figur 12.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

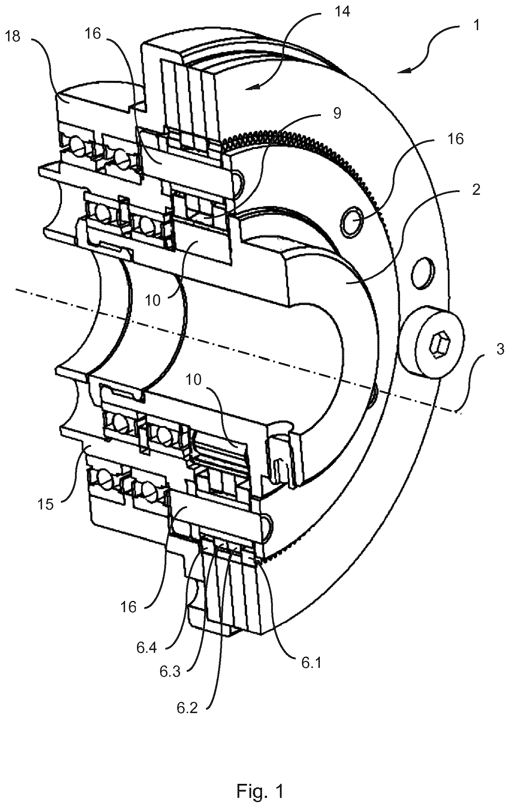

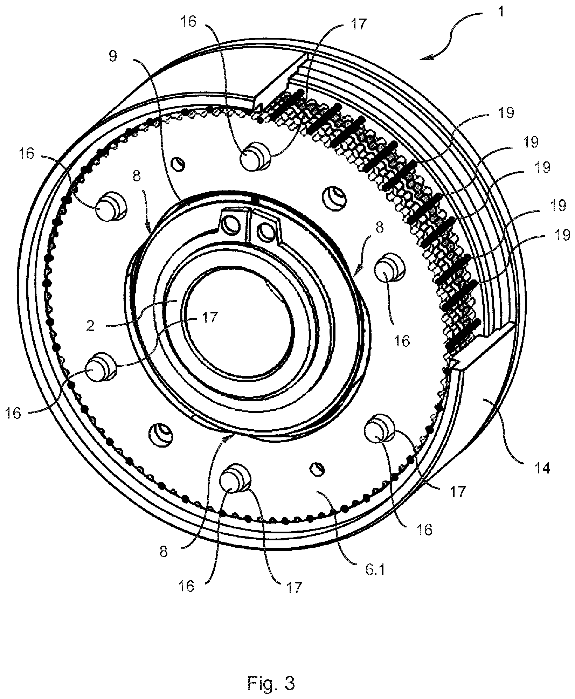

Die Figur 1 zeigt ein erfindungsgemäßes Exzentergetriebe 1 gemäß einem ersten Ausführungsbeispiel der vorliegenden Erfindung. Die innere Hohlwelle 2 bildet bei diesem Exzentergetriebe die Eingangswelle und gleichzeitig ein erstes Getriebeelement im Sinne der vorliegenden Erfindung. Sie weist eine erste Achse 3 auf, ist konzentrisch zur Welle 15 angeordnet und drehbar gegenüber der Welle 15 gelagert. Die Welle 15 bildet die Ausgangswelle des Getriebes und ist ihrerseits drehbar gegenüber einem Gehäuse 18 des erfindungsgemäßen Exzentergetriebes 1 gelagert. Die Welle 15 dient gleichzeitig als Träger von insgesamt vier Zahnkränzen 6.1, 6.2, 6.3 und 6.4, die mit dem ersten Getriebeelement 2 in mitnehmendem Eingriff stehen und die jeweils eine Außenverzahnung aufweisen, die in eine Innenverzahnung eines entsprechenden, mit dem Gehäuse verbundenen Hohlrads 14 eingreift. Die als Träger dienende Welle 15 weist zu diesem Zweck insgesamt sechs gleichmäßig in Umfangsrichtung verteilt angeordnete Zapfen 16 auf, die in entsprechenden Bohrungen 17 (vergleiche Figur 3) der Zahnkränze 6.1 bis 6.4 aufgenommen sind.

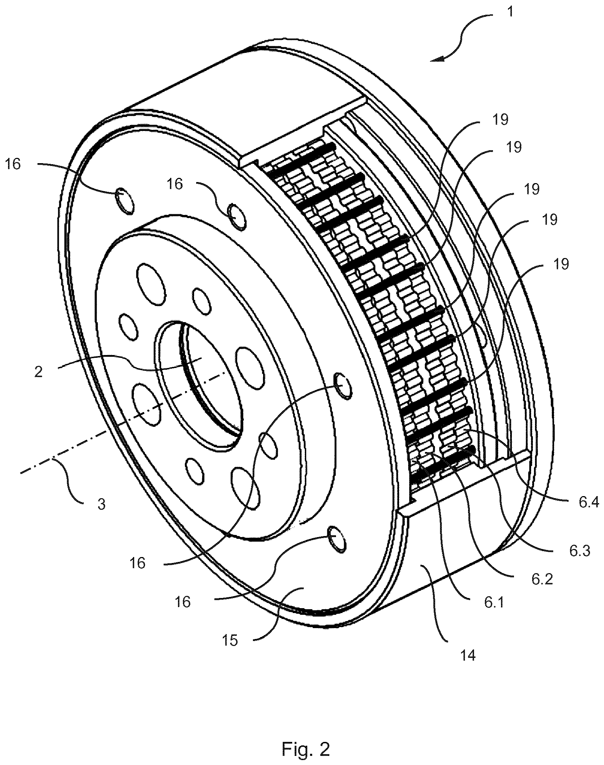

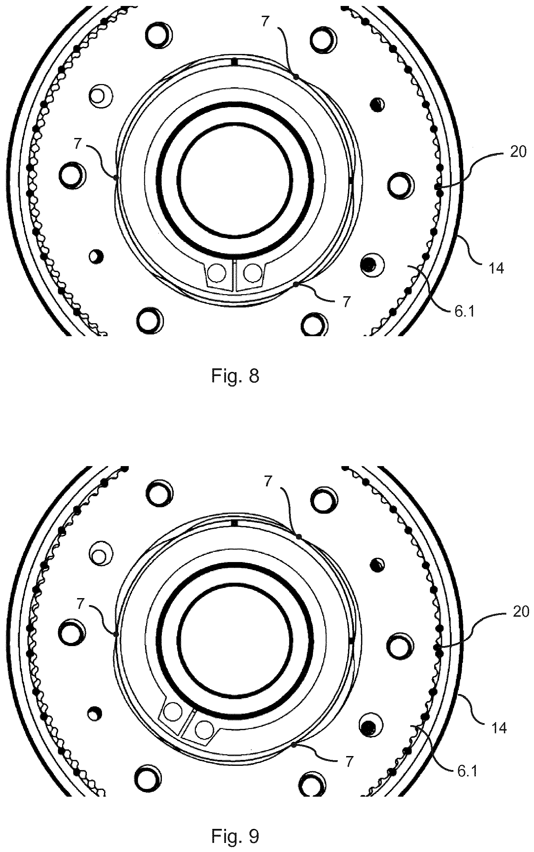

Die Funktionsweise des in Figur 1 gezeigten Exzentergetriebes entspricht dem in den Figuren 2 bis 11 gezeigten zweiten Ausführungsbeispiel, welches sich von dem ersten Ausführungsbeispiel im Prinzip nur dadurch unterscheidet, dass die Zähne der Innenverzahnung des Hohlrads 14 durch Zylinderbolzen 19 (vergleiche insbesondere Figuren 2 und 3) gebildet werden, wobei die Außenverzahnung der vier Zahnkränze 6.1 bis 6.4 durch eine geschlossene Trochoide gebildet wird. Bei dem ersten und zweiten Ausführungsbeispiel ist das erfindungsgemäße Exzentergetriebe daher als Zykloidgetriebe ausgeführt. Der Vollständigkeit halber wird darauf hingewiesen, dass nur jeder zweite bis dritte Zahn der Innenverzahnung des Hohlrads 14 tatsächlich realisiert ist. Für die weitere Erläuterung der Erfindung wird im Folgenden das zweite Ausführungsbeispiel betrachtet.

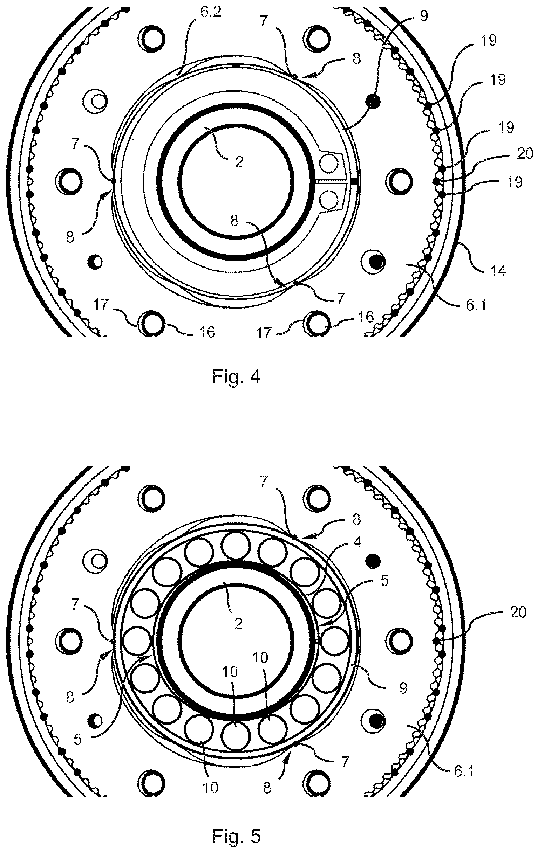

In Figur 3 und den nachfolgenden Figuren 4 bis 11 ist der vordere Teil des Trägers 15 entfernt, sodass freie Sicht auf das Innenleben des Getriebes besteht. Wie insbesondere die Figuren 3 und 4 zeigen, weist die Außenverzahnung der Zahnkränze 6.1 bis 6.4, wie bei herkömmlichen Zykloidgetrieben üblich, einen Zahn weniger auf als die Innenverzahnung des Hohlrads 14. Die Achsen der vier Zahnkränze werden stets exzentrisch in Bezug auf die Achse 3 des ersten Getriebeelements 2 gehalten. Bei der vorliegenden Erfindung wird dies jedoch nicht durch einen einfachen Exzenter erreicht. In Figur 5 ist zu erkennen, dass das erste Getriebeelement im Bereich der Zahnkränze eine Außenkontur 4 mit zwei um 180° zueinander versetzt angeordneten radial abstehenden Nocken 5 aufweist. Die Außenkontur 4 des ersten Getriebeelements ergibt sich durch eine Epitrochoide mit zwei Zyklen. Jeder der vier Zahnkränze 6.1 bis 6.4 weist jeweils eine Innenkontur mit insgesamt drei gleichmäßig in Umfangsrichtung verteilt angeordneten und nach innen weisenden Anlagenocken 8 auf. Zwischen der Außenkontur 4 des ersten Getriebeelements 2 und der Innenkontur eines jeden Zahnkranzes ist eine elastisch verformbaren Hülse 9 angeordnet, die über mehrere zwischen dem ersten Getriebeelement und der Hülse angeordnete Wälzkörper 10 drehbar gegenüber dem ersten Getriebeelement gelagert ist und sich bei Rotation des ersten Getriebeelements 2 nach Art eines Flexsplines eines Harmonic Drive Getriebes verformt. Die elastisch verformbare Hülse 9 nimmt somit stets die (parallel erweiterte) Form der Außenkontur 4 des ersten Getriebeelements 2 an. Die Anlagenocken 8 eines jeden Zahnkranzes liegen in den drei Anlagepunkten 7 an dem Außenumfang der Hülse 9 an, sodass die Zahnkränze 6.1 bis 6.4 indirekt über die Anlagenocken 8 an der Außenkontur 4 des ersten Getriebeelements 2 abgestützt sind.

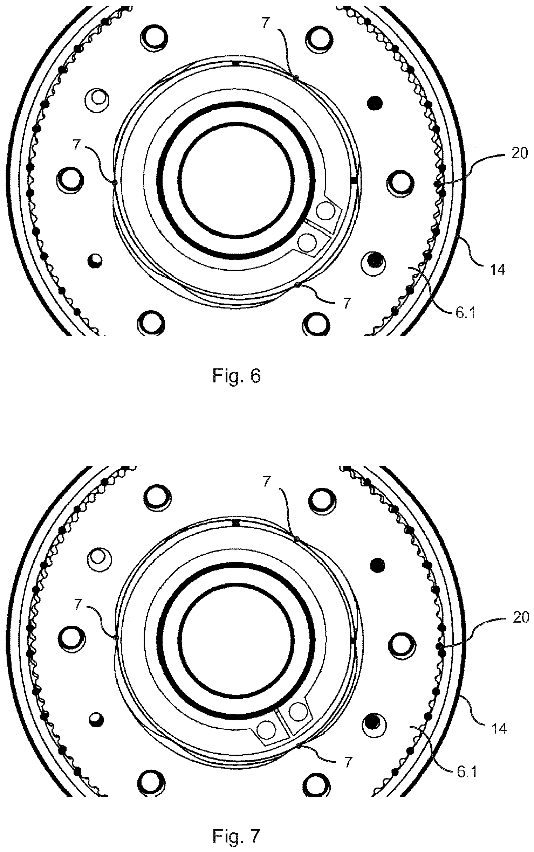

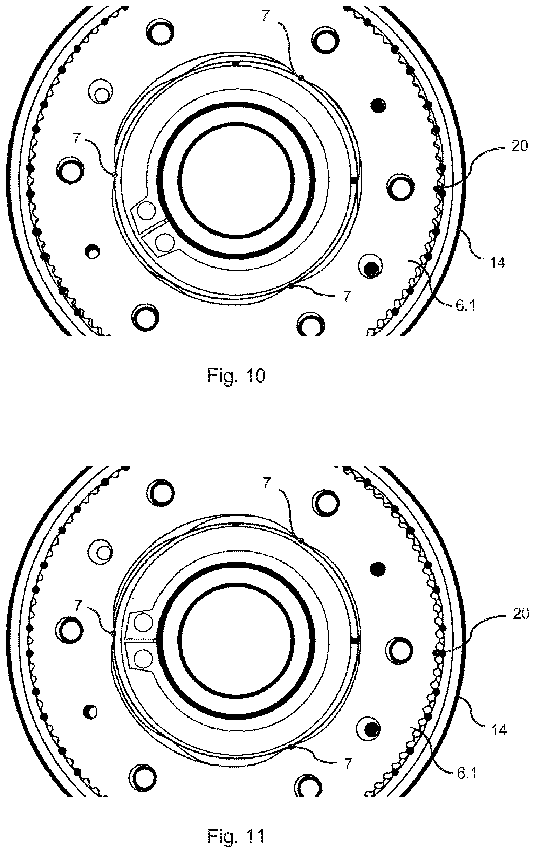

Die Figuren 6 bis 11 zeigen die Ansicht aus Figur 4, wobei das erste Getriebeelement 2 schrittweise um jeweils 30° gegenüber der in der jeweils vorangehenden Figur gezeigten Stellung gedreht wurde. Die Figur 11 zeigt somit eine um 180° gegenüber der Ausgangsstellung gedrehte Position des ersten Getriebeelements 2. Anhand des Markierungspunkts 20 auf einem Zahn der Außenverzahnung des ersten Zahnkranzes 6.1 ist deutlich zu erkennen, dass der erste Zahnkranz 6.1 dabei rotativ um einen Zahn der Innenverzahnung des Hohlrads 14 versetzt wird. Der Zahnkranz 6.1 erfährt dabei eine taumelnde Bewegung, die über den Eingriff zwischen den Bohrungen 17 des Zahnkranzes und den Zapfen 16 des Trägers 15 in eine kontinuierliche Drehbewegung des Trägers 15 umgesetzt wird.

Bei dem gezeigten Ausführungsbeispiel sind die Achsen der beiden äußeren Zahnkränze 6.1 und 6.4 in Bezug auf die Achse 3 des ersten Getriebeelements 2 gegenüber den Achsen der beiden inneren Zahnkränze 6.2 und 6.3 um 180° versetzt. Die beiden äußeren Zahnkränze und die beiden inneren Zahnkränze arbeiten jeweils synchron. Aus diesem Grund sind in den Figuren 4 bis 11 nur die Zahnkränze 6.1 und 6.2 zu erkennen.

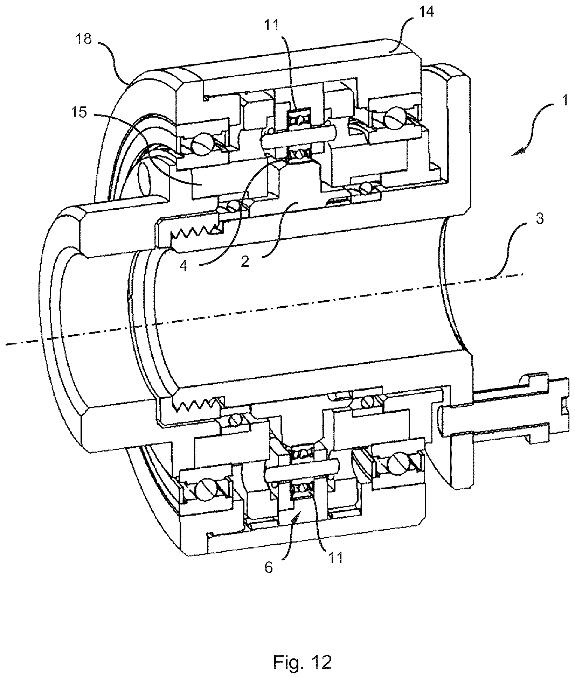

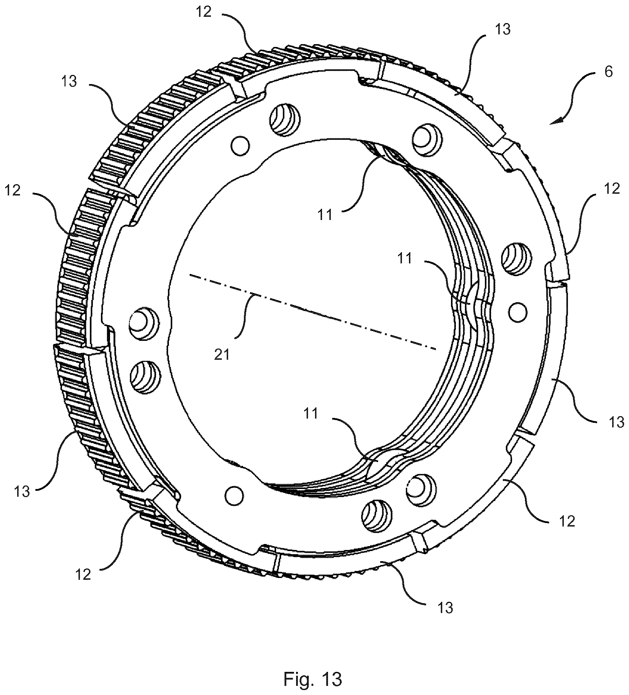

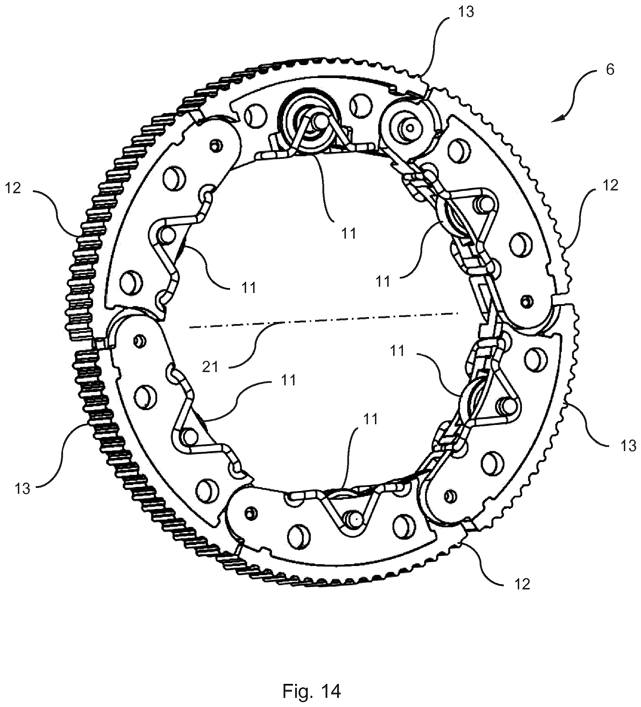

Bei dem Ausführungsbeispiel in den Figuren 2 bis 11 bilden die vier Zahnkränze 6.1 bis 6.4 jeweils ein zweites Getriebeelement 6 im Sinne der vorliegenden Anmeldung. Die Figuren 12 bis 14 zeigen ein drittes Ausführungsbeispiel der vorliegenden Erfindung, bei dem die vier Zahnkränze durch einen einzigen Zahnkranz 6 ersetzt sind. Wie die Figur 14 und die alternative Ausführung in Figur 13 zeigen, ist der Zahnkranz aus mehreren Segmenten 12 und 13 zusammengesetzt, was einen von Unwucht freien Aufbau ermöglicht. Mit dem Bezugszeichen 21 ist die Achse des Zahnkranzes 6 bezeichnet. An dem Zahnkranz 6 sind insgesamt sechs drehbar gelagerte Rollen 11 angebracht, die in Bezug auf die Achse 21 gleichmäßig in Umfangsrichtung verteilt angeordnet sind und in insgesamt sechs Anlagepunkten direkt auf der Außenkontur 4 des in Figur 12 gezeigten ersten Getriebeelements abrollen. Bei diesem Ausführungsbeispiel weist die Außenkontur 4 des ersten Getriebeelements 2 daher insgesamt fünf gleichmäßig in Umfangsrichtung verteilt angeordnete Nocken auf.

### Bezugszeichenliste

- 1: Exzentergetriebe
- 2: erstes Getriebeelement
- 3: erste Achse
- 4: Außenkontur
- 5: Nocke
- 6: zweites Getriebeelement
- 6.1: Zahnkranz
- 6.2: Zahnkranz
- 6.3: Zahnkranz
- 6.4: Zahnkranz
- 7: Anlagepunkt
- 8: Anlagenocke
- 9: elastisch verformbare Hülse
- 10: Wälzkörper
- 11: Rolle
- 12: Segment
- 13: Segment
- 14: Hohlrad
- 15: Träger
- 16: Zapfen
- 17: Bohrung
- 18: Gehäuse
- 19: Zylinderbolzen
- 20: Markierungspunkt
- 21: zweite Achse
- N: Anzahl

## Patentansprüche

1. Exzentergetriebe (1) mit einem ersten Getriebeelement (2), das eine erste Achse (3) sowie eine Außenkontur (4) mit zumindest einer in Bezug auf die erste Achse (3) radial abstehenden Nocke (5) aufweist, und mit einem zweiten Getriebeelement (6), das eine stets exzentrisch in Bezug auf die erste Achse (3) gehaltene zweite Achse (21) aufweist, wobei das erste Getriebeelement (2) relativ zum zweiten Getriebeelement (6) drehbar um die erste Achse (3) gelagert ist, und wobei das zweite Getriebeelement (6) derart an der Außenkontur (4) des ersten Getriebeelements (2) abgestützt ist, dass eine Rotation des ersten Getriebeelements (2) um die erste Achse (3) eine Rotation der zweiten Achse (21) des zweiten Getriebeelements (6) um die erste Achse (3) bewirkt, **dadurch gekennzeichnet, dass** die Außenkontur (4) des ersten Getriebeelements (2) eine Anzahl N in Bezug auf die erste Achse (3) radial abstehende Nocken (5) aufweist, die in Bezug auf die erste Achse (3) gleichmäßig in Umfangsrichtung verteilt angeordnet sind, wobei das zweite Getriebeelement (6) in N+1 Anlagepunkten (7) an der Außenkontur (4) des ersten Getriebeelements (2) abgestützt ist, und wobei die Anzahl N zumindest zwei beträgt.

2. Exzentergetriebe (1) nach Anspruch 1, **dadurch gekennzeichnet, dass** die Außenkontur (4) des ersten Getriebeelements (2) durch eine geschlossene Trochoide mit N Zyklen gebildet ist.

3. Exzentergetriebe (1) nach Anspruch 1 oder 2, **dadurch gekennzeichnet, dass** das zweite Getriebeelement (6) N+1 Anlagenocken (8) aufweist, die in Bezug auf die zweite Achse (21) des zweiten Getriebeelements (6) gleichmäßig in Umfangsrichtung verteilt angeordnet sind und zur zweiten Achse (21) weisen, wobei das zweite Getriebeelement (6) über die Anlagenocken (8) in N+1 Anlagepunkten (7) an der Außenkontur (4) des ersten Getriebeelements (2) abgestützt ist.

4. Exzentergetriebe (1) nach Anspruch 3, **dadurch gekennzeichnet, dass** die Anlagenocken (8) zumindest in einem Bereich, in dem der entsprechende Anlagepunkt (7) zu liegen kommen kann, eine kreisförmige, gegenüber der zweiten Achse (21) konvexe Kontur aufweisen.

5. Exzentergetriebe (1) nach Anspruch 3 oder 4, **dadurch gekennzeichnet, dass** die Außenkontur (4) des ersten Getriebeelements (2) von einer elastisch verformbaren Hülse (9) umgeben ist, die über mehrere zwischen erstem Getriebeelement (2) und Hülse (9) angeordnete Wälzkörper (10) drehbar gegenüber dem ersten Getriebeelement (2) gelagert ist, wobei die Anlagenocken (8) in den Anlagepunkten (7) an einem Außenumfang der Hülse (9) anliegen, sodass das zweite Getriebeelement (6) indirekt über die Anlagenocken (8) an der Außenkontur (4) des ersten Getriebeelements (2) abgestützt ist.

6. Exzentergetriebe (1) nach Anspruch 1 oder 2, **dadurch gekennzeichnet, dass** das Exzentergetriebe (1) N+1 drehbar an dem zweiten Getriebeelement (6) gelagerte Rollen (11) aufweist, die in Bezug auf die zweite Achse (21) des zweiten Getriebeelements (6) gleichmäßig in Umfangsrichtung verteilt angeordnet sind und in den Anlagepunkten (7) direkt auf der Außenkontur (4) des ersten Getriebeelements (2) abrollen.

7. Exzentergetriebe (1) nach Anspruch 6, **dadurch gekennzeichnet, dass** das zweite Getriebeelement (6) aus mehreren Segmenten (12, 13) zusammengesetzt ist.

8. Exzentergetriebe (1) nach einem der Ansprüche 1 bis 7, **dadurch gekennzeichnet, dass** die Anzahl N der Zahl Zwei entspricht.

9. Exzentergetriebe (1) nach einem der Ansprüche 1 bis 8, **dadurch gekennzeichnet, dass** das zweite Getriebeelement (6) ein Zahnkranz (6.1, 6.2, 6.3, 6.4) ist, der eine Verzahnung mit einer ersten Teilung aufweist, die in eine Verzahnung eines Hohlrads (14) mit einer zweiten Teilung eingreift, wobei die erste Teilung größer ist als die zweite Teilung.

10. Exzentergetriebe (1) nach Anspruch 9, **dadurch gekennzeichnet, dass** das Exzentergetriebe (1) vier hintereinander angeordnete Zahnkränze (6.1, 6.2, 6.3, 6.4) aufweist, die jeweils in N+1 Anlagepunkten (7) an der Außenkontur (4) des ersten Getriebeelements (2) abgestützt sind, wobei die zweiten Achsen (21) der beiden äußeren Zahnkränze (6.1, 6.4) in Bezug auf die erste Achse (3) des ersten Getriebeelements (2) um 180° gegenüber den zweiten Achsen (21) der beiden mittleren Zahnkränze (6.2, 6.3) versetzt sind.

11. Exzentergetriebe (1) nach Anspruch 9 oder 10, **dadurch gekennzeichnet, dass** der Zahnkranz (6.1, 6.2, 6.3, 6.4) aus Stahl oder Keramik gefertigt ist.

## Claims

1. Eccentric transmission (1) with a first transmission element (2) comprising a first axis (3) as well as an outer contour (4) with at least one cam (5) protruding radially with respect to the first axis (3), and with a second transmission element (6) comprising a second axis (21) that is always held eccentric with respect to the first axis (3), wherein the first transmission element (2) is mounted rotatably relative to the second transmission element (6) about the first axis (3), and wherein the second transmission element (6) is supported on the outer contour (4) of the first transmission element (2) in such a way that a rotation of the first transmission element (2) about the first axis (3) produces a rotation of the second axis (21) of the second transmission element (6) about the first axis (3), **characterised in that** the outer contour (4) of the first transmission element (2) comprises a number N of cams (5) protruding radially with respect to the first axis (3), which are uniformly distributed in peripheral direction with respect to the first axis (3), wherein the second transmission element (6) is supported in N+1 bearing points (7) on the outer contour (4) of the first transmission element (2), and wherein number N is at least two.

2. Eccentric transmission (1) of claim 1, **characterised in that** the outer contour (4) of the first transmission element (2) is shaped as a closed trochoid with N cycles.

3. Eccentric transmission (1) of claim 1 or 2, **characterised in that** the second transmission element (6) comprises N+1 bearing cams (8) which are uniformly distributed in peripheral direction with respect to the second axis (21) of the second transmission element (6) and point towards the second axis (21), wherein the second transmission element (6) is supported on the bearing cams (8) in N+1 bearing points (7) on the outer contour (4) of the first transmission element (2).

4. Eccentric transmission (1) of claim 3, **characterised in that** the bearing cams (8) feature a circular contour which is convex with respect to the second axis (21), in at least one area where the correspond bearing point (7) can be located.

5. Eccentric transmission (1) of claim 3 or 4, **characterised in that** the outer contour (4) of the first transmission element (2) is surrounded by an elastically deformable bushing (9), which is supported rotatably with respect to the first transmission element (2) on multiple rolling elements (10) arranged between the first transmission element (2) and the bushing (9), wherein the bearing cams (8) fit closely in the bearing points (7) on an outer circumference of the bushing (9), so that the second transmission element (6) is supported indirectly by the bearing cams (8) on the outer contour (4) of the first transmission element (2).

6. Eccentric transmission (1) of claim 1 or 2, **characterised in that** the eccentric transmission (1) comprises N+1 rollers (11) supported rotatably on the second transmission element (6), which are uniformly distributed in peripheral direction with respect to the second axis (21) of the second transmission element (6) and roll in the bearing points (7) directly on the outer contour (4) of the first transmission element (2).

7. Eccentric transmission (1) of claim 6, **characterised in that** the second transmission element (6) is composed of several segments (12, 13).

8. Eccentric transmission (1) of one of claims 1 to 7, **characterised in that** number N is equal to two.

9. Eccentric transmission (1) of one of claims 1 to 8, **characterised in that** the second transmission element (6) is a sprocket wheel (6.1, 6.2, 6.3, 6.4) and comprises a gearing with a first division which engages a gearing of a ring gear (14) with a second division, wherein the first division is larger than the second division.

10. Eccentric transmission (1) of claim 9, **characterised in that** the eccentric transmission (1) comprises four consecutively arranged sprocket wheels (6.1, 6.2, 6.3, 6.4) that are supported each in N+1 bearing points (7) on the outer contour (4) of the first transmission element (2), wherein the second axis (21) of both external sprocket wheels (6.1, 6.4) are offset 180° relative to first axis (3) of the first transmission element (2) with respect to the second axis (21) of both intermediary sprocket wheels (6.2, 6.3).

11. Eccentric transmission (1) of claim 9 or 10, **characterised in that** the sprocket wheel (6.1, 6.2, 6.3, 6.4) is made of steel or of a ceramic material.

## Revendications

1. Engrenage excentrique (1) avec un premier élément d'engrenage (2) qui comporte un premier axe (3) ainsi qu'un contour externe (4) avec au moins une came (5) ressortant radialement par rapport au premier axe (3), et avec un deuxième élément d'engrenage (6) qui comporte un deuxième axe (21) maintenu toujours en position excentrique par rapport au premier axe (3), dans lequel le premier élément d'engrenage (2) est supporté de manière rotative autour du premier axe (3) par rapport au deuxième élément d'engrenage (6), et dans lequel le deuxième élément d'engrenage (6) est supporté sur le contour externe (4) du premier élément d'engrenage (2) de telle sorte qu'une rotation du premier élément d'engrenage (2) autour du premier axe (3) entraîne une rotation du deuxième axe (21) du deuxième élément d'engrenage (6) autour du premier axe (3), **caractérisé en ce que** le contour externe (4) du premier élément d'engrenage (2) comporte un nombre N de cames (5) ressortant radialement par rapport au premier axe (3), qui sont distribuées uniformément en direction périphérique par rapport au premier axe (3), dans lequel le deuxième élément d'engrenage (6) est supporté à N+1 points d'appui (7) sur le contour externe (4) du premier élément d'engrenage (2), et dans lequel le nombre N est d'au moins deux.

2. Engrenage excentrique (1) selon la revendication 1, **caractérisé en ce que** le contour externe (4) du premier élément d'engrenage (2) est constitué par une trochoïde fermée à N cycles.

3. Engrenage excentrique (1) selon la revendication 1 ou 2, **caractérisé en ce que** le deuxième élément d'engrenage (6) comporte N+1 cames d'appui (8), qui sont distribuées uniformément en direction périphérique par rapport au deuxième axe (21) du deuxième élément d'engrenage (6) et pointent vers le deuxième axe (21), dans lequel le deuxième élément d'engrenage (6) est supporté sur les cames d'appui (8) à N+1 points d'appui (7) sur le contour externe (4) du premier élément d'engrenage (2).

4. Engrenage excentrique (1) selon la revendication 3, **caractérisé en ce que** les cames d'appui (8) présentent un contour de forme circulaire convexe par rapport au deuxième axe (21) au moins dans une zone dans laquelle peut se trouver le point d'appui correspondant (7).

5. Engrenage excentrique (1) selon la revendication 3 ou 4, **caractérisé en ce que** le contour externe (4) du premier élément d'engrenage (2) est entouré par une douille (9) élastiquement déformable, qui est supportée par plusieurs éléments roulants (10) agencés entre le premier élément d'engrenage (2) et la douille (9) de manière rotative par rapport au premier élément d'engrenage (2), dans lequel les cames d'appui (8) sont posées dans les points d'appui (7) sur la circonférence externe de la douille (9), de telle sorte que le deuxième élément d'engrenage (6) est supporté indirectement via les cames d'appui (8) sur le contour externe (4) du premier élément d'engrenage (2).

6. Engrenage excentrique (1) selon la revendication 1 ou 2, **caractérisé en ce que** l'engrenage excentrique (1) comporte N+1 rouleaux (11) supportés sur le deuxième élément d'engrenage (6), qui sont distribués uniformément en direction périphérique par rapport au deuxième axe (21) du deuxième élément d'engrenage (6) et roulent dans les points d'appui (7) directement sur le contour externe (4) du premier élément d'engrenage (2).

7. Engrenage excentrique (1) selon la revendication 6, **caractérisé en ce que** le deuxième élément d'engrenage (6) est constitué de plusieurs segments (12, 13).

8. Engrenage excentrique (1) selon l'une des revendications 1 à 7, **caractérisé en ce que** le nombre N est égal à deux.

9. Engrenage excentrique (1) selon l'une des revendications 1 à 8, **caractérisé en ce que** le deuxième élément d'engrenage (6) est une couronne à denture externe (6.1, 6.2, 6.3, 6.4) qui comporte une denture avec une première division engrenée dans la denture d'une couronne à denture interne (14) avec une deuxième division, dans lequel la première division est plus grande que la deuxième division.

10. Engrenage excentrique (1) selon la revendication 9, **caractérisé en ce que** l'engrenage excentrique (1) comporte quatre couronnes à denture externe (6.1, 6.2, 6.3, 6.4) agencées successivement, qui sont supportées chacune à N+1 points d'appui (7) sur le contour externe (4) du premier élément d'engrenage (2), dans lequel les deuxièmes axes (21) des deux couronnes à denture externe extérieures (6.1, 6.4) sont décalés de 180° sur le premier axe (3) du premier élément d'engrenage (2) par rapport aux deuxièmes axes (21) des deux couronnes à denture externe médianes (6.2, 6.3).

11. Engrenage excentrique (1) selon la revendication 9 ou 10, **caractérisé en ce que** la couronne à denture externe (6.1, 6.2, 6.3, 6.4) est réalisée en acier ou en céramique.
